# EUROPÄISCHE PATENTSCHRIFT

(11) **EP 4 374 095 B1**
(45) Veröffentlichungstag und Bekanntmachung des Hinweises auf die Patenterteilung: **15.10.2025**
(21) Anmeldenummer: 22735162.4
(22) Anmeldetag: 23.06.2022
(51) Int. Cl.: F16K 5/06, F16K 27/06

(54) **KUGELHAHN MIT ÜBERWACHUNGSRAUM**
BALL VALVE WITH MONITORING CHAMBER
ROBINET À BOISSEAU SPHÉRIQUE À CHAMBRE DE SURVEILLANCE

(30) Priorität: 21.07.2021 DE 102021118883
(43) Veröffentlichungstag der Anmeldung: 29.05.2024
(73) Patentinhaber: Werner Hartmann GmbH & Co. KG, 29229 Celle (DE)
(72) Erfinder: HARTMANN, Christian, 29229 Celle (DE)
(74) Vertreter: Freischem & Partner Patentanwälte mbB
(86) Internationale Anmeldenummer: PCT/EP2022/067212
(87) Internationale Veröffentlichungsnummer: WO 2023/001483

(56) Entgegenhaltungen:
- EP-A1- 0 991 888
- EP-A1- 1 322 929
- DE-A1- 4 003 864
- DE-B- 1 209 381
- US-A- 2 764 891
- US-A- 3 386 461
- US-A- 3 938 544
- US-A- 4 137 936
- US-A1- 2015 377 366
- US-B2- 8 141 843

## Beschreibung

Die vorliegende Erfindung betrifft einen Kugelhahn mit einem Hahngehäuse; einem Schleusenraum zum bedarfsweisen Einschleusen von Gegenständen oder Medien; einem in dem Schleusenraum drehbar gelagerten Kugelküken, welches eine quer zur Drehachse orientierte Durchgangsöffnung aufweist und über ein Stellglied, das derart drehbar angeordnet ist, dass das Kugelküken in mindestens eine geöffnete Stellung und in mindestens eine geschlossene Stellung bringbar ist; mindestens einem Hauptkanal-Zuströmabschnitt und mindestens einem Hauptkanal-Abströmabschnitt zur Integration des Kugelhahns in eine Fluidleitung, wobei der Hauptkanal-Zuströmabschnitt und der Hauptkanal-Abströmabschnitt in der geöffneten Stellung des Kugelkükens mittels der Durchgangsöffnung durchströmbar verbunden sind und in der geschlossenen Stellung des Kugelkükens der Hauptkanal-Zuströmabschnitt und der Hauptkanal-Abströmabschnitt fluidal separiert sind oder der Durchfluss vom Hauptkanal-Zuströmabschnitt in den Hauptkanal-Abströmabschnitt über mindestens einen Bypass zumindest gedrosselt ist, während die Durchgangsöffnung über den Schleusenraum von außen zugänglich ist; und Hauptkanal-Dichtelementen, mittels welchen bei geschlossener Stellung des Kugelkükens der Schleusenraum gegenüber dem Hauptkanal-Zuströmabschnitt und dem Hauptkanal-Abströmabschnitt abgedichtet ist.

Kugelhähne sind aus der Praxis bekannt und somit Stand der Technik. Ein Kugelhahn mit den vorstehenden Merkmalen ist beispielsweise aus der Druckschrift DE 40 03 864 A1 bekannt. Der dort offenbarte Kugelhahn ist als Molchhahn ausgebildet und weist ein Hahngehäuse mit einem Hauptkanal-Zuströmabschnitt und einem Hauptkanal-Abströmabschnitt auf, welche miteinander fluchten und als zwei Anschlussstutzen bezeichnet werden. Das Hahngehäuse weist ferner einen dritten, seitlichen Stutzen eines als Molchschleuse bezeichneten Schleusenraumes auf. In dem Hahngehäuse ist ein Kugelküken gelagert, das mit einer Durchgangsbohrung versehen und über als in Sitzringen gehaltene Dichtringe bezeichnete Hauptkanal-Dichtelemente abgedichtet ist.

Bei dem aus dem Stand der Technik bekannten Kugelhahn besteht für einen Bediener, welcher einen Verschluss zu dem Schleusenraum öffnet, um Gegenstände oder Medien in eine sich an den Kugelhahn anschließende Fluidleitung einzuschleusen, regelmäßig ein Bedienrisiko. Denn falls die Hauptkanal-Dichtelemente, mittels welchen bei geschlossener Stellung des Kugelkükens der Schleusenraum gegenüber dem Hauptkanal-Zuströmabschnitt und dem Hauptkanal-Abströmabschnitt abgedichtet ist, ihre Funktion nicht oder nicht mehr ordnungsgemäß erfüllen, kann das in der Fluidleitung befindliche Fluid die Hauptkanal-Dichtelemente passieren und über den Schleusenraum unerwartet einen hohen Druck auf den Schleusenraum und zu öffnenden Verschluss ausüben. Wenn in diesem Fall ein Bediener die Schleuse öffnet, kann Fluid unter hohem Druck aus dem Schleusenraum austreten und auf den Bediener treffen. Es ist auch möglich, dass das Fluid dabei Gegenstände, die sich in oder an der Fluidleitung oder dem Schleusenraum befinden, mitträgt und diese Gegenstände den Bediener verletzen.

Das vorstehend beschriebene Bedienrisiko wird in der Praxis oft dadurch reduziert, dass Sensoren in dem Schleusenraum angeordnet sind, mittels welchen ein Fluid in dem Schleusenraum ermittelt werden kann. Problematisch ist jedoch, dass derartige Sensoren versagen können, so dass einem Bediener falsche Informationen zum Bedienrisiko vermittelt werden. Darüber hinaus reduzieren derartige Sensoren das Bedienrisiko regelmäßig nur dann zuverlässig, wenn der Schleusenraum mit dem Verschluss verschlossen ist. Dieses Bedienrisiko wird in der Praxis teilweise durch zusätzliche mechanische Sicherungen reduziert, mittels welchen ein Öffnen des Verschlusses zum Schleusenraum verhindert wird, wenn in dem Schleusenraum ein Überdruck herrscht.

Ein erhöhtes Bedienrisiko besteht insbesondere bei geöffnetem Schleusenraum, denn es ist möglich, dass die Hauptkanal-Dichtelemente bei geöffnetem Schleusenraum spontan versagen. In diesem Fall hat der Bediener selbst dann, wenn die vorstehenden Sensoren ordnungsgemäß funktionieren, aufgrund des häufig hohen Drucks des Fluids in der Fluidleitung regelmäßig nicht ausreichend Zeit, um den Verschluss zum Schleusenraum zu verschließen oder sich in Sicherheit zu bringen.

Aus US 2015/0377366 A1 ist ein Kugelhahn mit den Merkmalen des Oberbegriffs bekannt, wobei auf einen Schleusenraum zwar nicht explizit hingewiesen wird, ein solcher aber in den Figuren erkennbar ist. Das oben beschriebene Bedienrisiko für einen Bediener bei einem unterstellten geöffneten Schleusenraum besteht bei dem in US 2015/0377366 A1 offenbarten Kugelhahn in gleicher Weise wie oben beschrieben.

Der Erfindung liegt daher die Aufgabe zugrunde, einen Kugelhahn bereitzustellen, der das Bedienrisiko für einen Bediener des Kugelhahns weiter reduziert und der konstruktiv einfach gestaltet ist.

Die Lösung der Aufgabe erfolgt erfindungsgemäß mit den Merkmalen des unabhängigen Anspruchs. Weitere praktische Ausführungsformen und Vorteile der Erfindung sind in Verbindung mit den abhängigen Ansprüchen beschrieben.

Der erfindungsgemäße Kugelhahn umfasst ein Hahngehäuse, einen Schleusenraum zum bedarfsweisen Einschleusen von Gegenständen oder Medien, ein in dem Schleusenraum drehbar gelagertes Kugelküken, welches eine quer zur Drehachse orientierte Durchgangsöffnung aufweist und über ein Stellglied derart drehbar angeordnet ist, dass das Kugelküken in mindestens eine geöffnete Stellung und in mindestens eine geschlossene Stellung bringbar ist. Ferner umfasst der Kugelhahn mindestens einen Hauptkanal-Zuströmabschnitt und mindestens einen Hauptkanal-Abströmabschnitt zur Integration des Kugelhahns in eine Fluidleitung. Der Hauptkanal-Zuströmabschnitt und der Hauptkanal-Abströmabschnitt sind in der geöffneten Stellung des Kugelkükens mittels der Durchgangsöffnung durchströmbar verbunden und in der geschlossenen Stellung des Kugelkükens fluidal separiert oder der Durchfluss vom Hauptkanal-Zuströmabschnitt in den Hauptkanal-Abströmabschnitt ist über mindestens einen Bypass zumindest gedrosselt, während die Durchgangsöffnung über den Schleusenraum von außen zugänglich ist. Es sind ferner Hauptkanal-Dichtelemente bei dem erfindungsgemäßen Kugelhahn vorgesehen, mittels welchen bei geschlossener Stellung des Kugelkükens der Schleusenraum gegenüber dem Hauptkanal-Zuströmabschnitt und dem Hauptkanal-Abströmabschnitt abgedichtet ist.

Der Schleusenraum ist über mindestens eine Öffnung von außerhalb des Hahngehäuses zum bedarfsweisen Einschleusen von Gegenständen oder Medien in die Fluidleitung zugänglich. Mit Einschleusen ist nicht nur das Einbringen von Gegenständen gemeint, die anschließend gemeinsam mit einem das Hahngehäuse durchströmenden Fluid "mitwandern", sondern auch das Einbringen von Gegenständen in das Hahngehäuse, die dann in dem Hahngehäuse verbleiben. Nur beispielhaft wird insoweit auf das Einbringen von Filterelementen, Messtechnik oder anderen Elementen hingewiesen. Es ist auch möglich, Gegenstände oder Medien über die Öffnung zum Einschleusen von Gegenständen oder Medien aus der Fluidleitung auszuschleusen, d.h. dem Hahngehäuse zu entnehmen. Zum Zweck des Ein- bzw. Ausschleusens von Gegenständen oder Medien in die Fluidleitung bzw. aus der Fluidleitung mittels des erfindungsgemäßen Kugelhahns ist der Kugelhahn derart ausgebildet, dass der in oder an dem Hahngehäuse ausgebildete mindestens eine Hauptkanal-Zuströmabschnitt und der ebenfalls in oder an dem Hahngehäuse ausgebildete mindestens eine Hauptkanal-Abströmabschnitt über den Schleusenraum durchströmbar miteinander verbunden sind, wenn sich das Kugelküken in der geöffneten Stellung befindet oder wenn das Kugelküken aus dem Hahngehäuse entfernt ist.

Durch den mindestens einen Hauptkanal-Zuströmabschnitt kann ein Fluid aus einem stromaufwärts des Kugelhahns angeordneten Abschnitt der Fluidleitung, in welche der Kugelhahn integriert ist, in den Kugelhahn strömen. Es ist auch möglich, dass eine Mehrzahl stromaufwärts gelegener Abschnitte einer oder mehrerer Fluidleitungen mit einer Mehrzahl von Hauptkanal-Zuströmabschnitten des Kugelhahns durchströmbar verbunden sind.

Durch den mindestens einen Hauptkanal-Abströmabschnitt kann ein Fluid von dem Kugelhahn in einen stromabwärts des Kugelhahns angeordneten Abschnitt der Fluidleitung, in welche der Kugelhahn integriert ist, strömen. Es ist auch möglich, dass mehrere stromabwärts gelegene Abschnitte einer oder mehrerer Fluidleitungen mit einer Mehrzahl von Hauptkanal-Abströmabschnitten des Kugelhahns durchströmbar verbunden sind.

Das in dem Schleusenraum gelagerte Kugelküken weist äußerlich zumindest teilweise die Form einer Kugel auf. Von der Kugelform weicht das Kugelküken insbesondere aufgrund der Durchgangsöffnung ab und auch im Bereich der Lagerung des Kugelkükens in dem Kugelhahn kann das Kugelküken von der Form einer Kugel abweichen. In Abhängigkeit der Stellung des Kugelkükens in dem Schleusenraum decken Abschnitte der Kugelfläche entweder den mindestens einen Hauptkanal-Zuströmabschnitt und den mindestens einen Hauptkanal-Abströmabschnitt oder mindestens die Öffnung zum bedarfsweisen Einschleusen von Gegenständen oder Medien ab.

Aufgrund der drehbaren Lagerung des Kugelkükens ist eine Mehrzahl verschiedener Stellungen des Kugelkükens einstellbar. Diese verschiedenen Stellungen unterscheiden sich im Wesentlichen durch die Orientierung der in dem Kugelküken ausgebildeten Durchgangsöffnung und die Orientierung der Kugelflächenabschnitte des Kugelkükens bezüglich des Schleusenraumes bzw. der Fluidleitung. Das Kugelküken kann inkrementell oder stufenlos in dem Schleusenraum gelagert sein, so dass eine beliebige Anzahl von Stellungen des Kugelkükens einstellbar ist. Wenn in einer Stellung des Kugelkükens der mindestens eine Hauptkanal-Zuströmabschnitt und der mindestens eine Hauptkanal-Abströmabschnitt abgedeckt und somit fluidal voneinander separiert sind, befindet sich das Kugelküken in der geschlossenen Stellung. Die quer zu der Drehachse orientierte Durchgangsöffnung in dem Kugelküken ist dann zu der Öffnung zum bedarfsweisen Einschleusen von Gegenständen oder Medien orientiert und somit über den Schleusenraum von außen zugänglich. In der geschlossenen Stellung des Kugelkükens dichten die Hauptkanal-Dichtelemente den Schleusenraum gegenüber dem Hauptkanal-Zuströmabschnitt und dem Hauptkanal-Abströmabschnitt ab. Zu diesem Zweck wirken die Hauptkanal-Dichtelemente insbesondere mit dem Hahngehäuse zusammen. Zusätzlich können die Hauptkanal-Dichtelemente auch mit dem in der geschlossenen Stellung befindlichen Kugelküken zusammenwirken.

Wenn in einer Stellung des Kugelkükens der mindestens eine Hauptkanal-Zuströmabschnitt und der mindestens eine Hauptkanal-Abströmabschnitt nicht von den Abschnitten der Kugelfläche des Kugelkükens abgedeckt sind, sondern durchströmbar verbunden sind, befindet sich das Kugelküken in einer geöffneten Stellung, in welcher die Öffnung zum bedarfsweisen Einschleusen von Gegenständen oder Medien durch die Kugelflächenabschnitte des Kugelkükens abgedeckt ist.

Es ist auch möglich, dass der Kugelhahn mehr als einen Hauptkanal-Zuströmabschnitt und/oder mehr als einen Hauptkanal-Abströmabschnitt aufweist. In diesem Fall können mehrere geöffnete Stellungen durch das Kugelküken eingenommen werden. Wenn beispielsweise zwei Hauptkanal-Zuströmabschnitte und zwei Hauptkanal-Abströmabschnitte vorgesehen sind, ist das Kugelküken in eine erste geöffnete Stellung bringbar, in welcher der erste Hauptkanal-Zuströmabschnitt mit dem ersten Hauptkanal-Abströmabschnitt durchströmbar verbunden ist. Alternativ ist das Kugelküken in eine zweite geöffnete Stellung bringbar, in welcher der zweite Hauptkanal-Zuströmabschnitt mit dem zweiten Hauptkanal-Abströmabschnitt durchströmbar verbunden ist. Es können auch weitere Hauptkanal-Zuströmabschnitte und/oder Hauptkanal-Abströmabschnitte vorgesehen sein, welche zu entsprechend der vorstehenden Beschreibung weiteren geöffneten Stellungen des Kugelkükens führen können.
Zur Lösung der vorstehend genannten Aufgabe sind bei dem erfindungsgemäßen Kugelhahn Zusatz-Dichtelemente derart vorgesehen, dass ein in der geschlossenen Stellung des Kugelkükens abgedichteter Überwachungsraum zum Überwachen einer ordnungsgemäßen Funktion der Hauptkanal-Dichtelemente innerhalb des Schleusenraumes gebildet ist. Mit anderen Worten ausgedrückt, ist der Schleusenraum in der geschlossenen Stellung des Kugelkükens durch die Zusatz-Dichtelemente in zwei fluidal voneinander separierte Bereiche unterteilt, wobei einer dieser Bereiche als Überwachungsraum dient. Der erste der beiden Bereiche grenzt an die Öffnung zum bedarfsweisen Einschleusen von Medien und Gegenständen an; der zweite der beiden Bereiche ist der Überwachungsraum und ist zwischen dem ersten Bereich und den Hauptkanal-Dichtelementen angeordnet. Wenn die Hauptkanal-Dichtelemente den Schleusenraum nicht funktionsgemäß gegenüber dem mindestens einen Hauptkanal-Zuströmabschnitt und dem mindestens einen Hauptkanal-Abströmabschnitt abdichten, strömt ein Teil des Fluids aus der Fluidleitung in den Überwachungsraum.

Der Überwachungsraum ist derart ausgebildet, dass das Fluid aus der Fluidleitung nicht daran vorbei in den ersten Bereich des Schleusenraumes strömen kann. Da der Überwachungsraum überwacht werden kann, kann ein Bediener des erfindungsgemäßen Kugelhahns vorgewarnt werden, wenn die Hauptkanal-Dichtelemente nicht funktionsgemäß dichten und das Fluid in den Überwachungsraum einströmt. Beispielsweise kann der Überwachungsraum durch einen Bediener des Kugelhahns überwacht werden. Dafür kann der Überwachungsraum einen transparenten Sichtabschnitt aufweisen, durch welches der Bediener den Zustand des Überwachungsraumes beobachten und insbesondere erkennen kann, wenn in den Überwachungsraum unvorhergesehen ein (nicht transparentes) Fluid einströmt.

Alternativ oder in Ergänzung kann der Druckraum mit einem Druckraumkanal und einem Ablasshahn versehen sein, um durch Öffnen des Ablasshahns und Abwarten feststellen zu können, ob aufgrund nicht ordnungsgemäß arbeitender Hauptkanal-Dichtelemente noch kontinuierlich Fluid in den Druckraum eindringt.

Wenn der Bediener so oder auf andere Art und Weise vorgewarnt wird, dass Fluid in den Überwachungsraum einströmt oder der Überwachungsraum mit Fluid gefüllt ist, während die Öffnung zum Schleusenraum geschlossen ist, kann der Bediener aufgrund der Vorwarnung aus Sicherheitsgründen auf das Öffnen der Öffnung verzichten. Für den Fall, dass die Hauptkanal-Dichtelemente im geöffneten Zustand des Schleusenraumes plötzlich versagen, steht dem Bediener ferner ausreichend Zeit zur Verfügung, um die Öffnung zu verschließen und/oder sich von dem nicht ordnungsgemäß funktionierenden Kugelhahn zu entfernen, bevor das Fluid aus dem Kugelhahn herausströmt, da die Zusatz-Dichtelemente das Fluid in dem Kugelhahn zurückhalten.

Es wird darauf hingewiesen, dass das Hahngehäuse eines erfindungsgemäßen Kugelhahns ein oder mehrteilig gestaltet sein kann. Insbesondere wird auf eine einteilige Ausbildung des Hahngehäuses mit einer oberseitigen Öffnung und einem dafür vorgesehenen Deckel verwiesen, auf eine zweiteilige Ausbildung, bei welcher das Hahngehäuse durch zwei Gehäuseelemente (z.B. aus einem Hauptgehäuseelement und einem kleineren Gehäuseelement, insbesondere einem ausgeformten Deckel) gebildet ist sowie auf eine dreiteilige Ausbildung, insbesondere mit zwei seitlichen Gehäuseelementen oder Deckeln.

In einer geeigneten Weiterbildung des Kugelhahns sind der Hauptkanal-Zuströmabschnitt, der Hauptkanal-Abströmabschnitt und der Schleusenraum in dem Hahngehäuse angeordnet und der Schleusenraum ist orthogonal zu dem mindestens einen Hauptkanal-Zuströmabschnitt und/oder dem mindestens einen Hauptkanal-Abströmabschnitt orientiert. Wenn der Hauptkanal-Zuströmabschnitt, der Hauptkanal-Abströmabschnitt und der Schleusenraum in dem Hahngehäuse angeordnet sind, ist der Kugelhahn insgesamt kompakt ausgebildet und er weist eine hohe mechanische Steifigkeit auf. Das ist für eine Integration des Kugelhahns in Hochdruck-Fluidleitungen von besonderer Bedeutung. Wenn der Hauptkanal-Zuströmabschnitt und der Hauptkanal-Abströmabschnitt nicht in dem Hahngehäuse angeordnet sind, sondern beispielsweise durch ein Fügeverfahren außenseitig daran angeschlossen sind, kann der hohe Druck des Fluids Schäden an den Fügenähten verursachen. Die orthogonale Orientierung des Schleusenraumes zu dem mindestens einen Hauptkanal-Zuströmabschnitt und/oder dem mindestens einen Hauptkanal-Abströmabschnitt ist eine besonders einfache Konstruktion des Kugelhahns und gestattet, diesen auf einfache Weise herzustellen. Ferner sind hierdurch besonders große Strömungsquerschnitte des Schleusenraumes, des Hauptkanal-Zuströmabschnitts und des Hauptkanal-Abströmabschnitts erzielbar. Zusätzlich oder alternativ ergibt sich ein großer Drehwinkel zwischen der geöffneten und der geschlossenen Stellung des Kugelkükens, so dass die Wahrscheinlichkeit eines ungewünschten Öffnens des Kugelhahns reduziert ist und ein großer Verfahrweg für eine präzisiere Steuerung des Verfahrens zur Verfügung steht.

Der Vollständigkeit halber wird darauf hingewiesen, dass einzelne Elemente, insbesondere ein quer zu einem Hauptkanal ausgebildeter Schleusenkanal, als separate Elemente ausgebildet und auf geeignete Art und Weise mit dem Hahngehäuse verbunden sein können. So kann beispielsweise ein separater Schleusenstutzen mit einem Schleusenverschluss von außen an dem Hahngehäuse angeschweißt oder angeschraubt sein.

In einer weiteren praktischen Ausbildung des Kugelhahns können die Zusatz-Dichtelemente mindestens in dem Schleusenraum und/oder an der Grenze des Schleusenraumes zu dem Hauptkanal-Zuströmabschnitt und dem Hauptkanal-Abströmabschnitt angeordnet sein.

Wenn die Zusatz-Dichtelemente im Schleusenraum angeordnet sind, kann der Überwachungsraum in vorteilhafter Weise groß sein. In diesem Fall kann eine größere Menge des Fluids aus der Fluidleitung in den Überwachungsraum strömen, falls die Hauptkanal-Dichtelemente defekt sind und es vergeht eine längere Zeitspanne, bis der Überwachungsraum gefüllt ist und der Druck des Fluids vollständig auf die Zusatz-Dichtelemente wirkt. Des Weiteren können die Hauptkanal-Dichtelemente und die Zusatz-Dichtelemente in diesem Fall besonders weit voneinander entfernt sein. Wenn die Dichtelemente mit dem Kugelküken in Kontakt stehen und die Kugelfläche des Kugelkükens mit Partikeln verunreinigt ist, kann durch diese Anordnung verhindert werden, dass die Verunreinigungen, welche Beschädigungen an einem der Hauptkanal-Dichtelemente bzw. der Zusatz-Dichtelemente verursachen können, ebenfalls Beschädigungen an den Zusatz-Dichtelementen bzw. den Hauptkanal-Dichtelementen verursachen. Denn diese Verunreinigungen kommen dann nur mit einem der Dichtelemente oder zumindest an unterschiedlichen Stellen der Dichtelemente in Kontakt.

Wenn die Zusatz-Dichtelemente in dem Bereich an der Grenze des Schleusenraumes zu dem Hauptkanal-Zuströmabschnitt und dem Hauptkanal-Abströmabschnitt angeordnet sind, ist der Überwachungsraum im Vergleich zu der zuletzt beschriebenen Ausführungsform klein. Hierdurch ergeben sich andere Vorteile als die vorstehend genannten. Insbesondere können dann konstruktiv nur geringfügig veränderte Hahngehäuse aus dem Stand der Technik verwendet werden, um den zusätzlichen Überwachungsraum zu bilden. Ferner kann dann im Falle eines nicht mehr ordnungsgemäß funktionierenden Dichtelements ein Druckanstieg aufgrund eines kleineren Volumens schneller detektiert werden, was insbesondere dann relevant ist, wenn die Leckage gering ist.

Es wird darauf hingewiesen, dass sich durch eine Kombination der beiden vorstehend beschriebenen Ausführungsformen oder eine mehrfache Realisierung einer Ausführungsform auch möglich ist, einen Kugelhahn mit zwei oder mehr Überwachungsräumen zu bilden.

Zusätzlich oder alternativ können Überwachungsmittel zum Überwachen des Zustandes des Überwachungsraumes vorgesehen sein. Als Überwachungsmittel kann beispielsweise ein Schallsensor, ein Drucksensor und/oder ein optischer Sensor vorgesehen sein. Es kann auch jedes andere Überwachungsmittel zum Überwachen des Überwachungsraumes, das für die Erfindung geeignet ist, verwendet werden.

Die mittels eines Schallsensors gemessene Ausbreitung von Schallwellen sowie der mittels eines Drucksensors gemessene Druck und die mittels eines optischen Sensors gemessene Absorption oder Reflexion von Lichtwellen in dem Überwachungsraum ist im Wesentlichen von einer Befüllung des Überwachungsraumes mit einem Fluid abhängig. Alle vorstehend genannten Sensoren sind aus dem Stand der Technik bekannt und dazu geeignet, ein Messsignal in ein elektrisches Signal zu wandeln. Das elektrische Signal kann mittels einer Recheneinheit mit einem Sollwert verglichen werden. Wenn der Messwert den Sollwert überschreitet oder unterschreitet, kann ein beispielsweise optisches oder akustisches Warnsignal an den Bediener ausgegeben werden, welches indiziert, dass sich Fluid in dem Überwachungsraum befindet. Durch die Verwendung derartiger Überwachungsmittel ist die Sicherheit für den Bediener weiter erhöht, da dieser den Überwachungsraum nicht aktiv kontrollieren muss.

Als Überwachungsmittel kann auch ein von dem Überwachungsraum durch das Hahngehäuse nach außen führender Kanal vorgesehen sein. Ein solcher Kanal kann entweder zur Drucküberwachung genutzt oder alternativ mit einer Dichtmittelinjektion gefüllt werden, wobei das Dichtmittel vorzugsweise derart ausgebildet ist, dass es bei Überschreiten eines vorgegebenen Drucks aus dem Kanal austritt, so dass für eine Bedienperson ersichtlich ist, dass in dem Überwachungsraum ein erhöhter Druck vorliegt und dementsprechend der Schleusenverschluss schnellstmöglich geschlossen werden sollte, sofern er geöffnet ist.

Alternativ oder in Ergänzung kann ein Dichtmittel innerhalb des Druckraums auch so angeordnet und ausgewählt sein, dass das Dichtmittel im Falle einer Undichtigkeit eine Notabdichtung erzeugt. Insbesondere besteht die Möglichkeit, durch Injektion und Aushärten oder - bei ausreichend hoher Viskosität - ausschließlich durch Injektion in den Druckraum eine Beschädigung eines Dichtelements im geschlossenen stationären Fall zu schließen. Durch Betätigen der Armatur würde dann jedoch die Notabdichtung versagen.

In der Praxis kann das Hahngehäuse einen Gehäusedeckel und/oder einen Schleusenverschluss zum Verschließen des Schleusenraumes aufweisen. Der Gehäusedeckel kann eine optional in dem Hahngehäuse angeordnete zweite Öffnung zu dem Schleusenraum verschließen. Die zweite Öffnung kann beispielsweise vorgesehen sein, um das Kugelküken auf einfache Weise in den Schleusenraum einzubringen und/oder um Wartungsarbeiten an dem Kugelhahn durchzuführen. Dafür kann der Gehäusedeckel kraftschlüssig und/oder formschlüssig mit dem Hahngehäuse verbunden und bei Bedarf abnehmbar sein.

Der Schleusenverschluss ist insbesondere dann wichtig, wenn die Öffnung zum bedarfsweisen Einschleusen von Medien oder Gegenständen selbst verschließbar sein muss. Dies ist beispielsweise dann notwendig, wenn der Kugelhahn nicht mit dem Schleusenraum an eine verschließbare Leitung zum bedarfsweisen Zuführen von Medien oder Gegenständen zu dem Kugelhahn angeschlossen ist.

In einer weiteren praktischen Ausführungsform des Kugelhahns können die Hauptkanal-Dichtelemente und/oder die Zusatz-Dichtelemente jeweils zumindest einen metallischen Sitzring und/oder ein elastisches Dichtmittel aufweisen. Ein elastisches Dichtmittel kann beispielsweise in einer den Sitzring umlaufenden Nut angeordnet sein. Insbesondere kann das elastische Dichtmittel ein O-Ring sein. Die Sitzringe mit den elastischen Dichtmitteln können derart zwischen dem Kugelküken und dem Hahngehäuse angeordnet sein, dass eine dichtende Wirkung durch Zusammenwirken des Kugelkükens, des Hahngehäuses und des jeweiligen Sitzrings mit dem elastischen Dichtmittel erzielt wird. Dabei kann das elastische Dichtmittel an dem Hahngehäuse und/oder an dem Kugelküken anliegen. Es ist auch möglich, dass die Hauptkanal-Dichtelemente und/oder die Zusatz-Dichtelemente nicht mit dem elastischen Dichtmittel, sondern mit dem metallischen Sitzring an dem Kugelküken anliegen. Kugelhähne mit derartigen Dichtelementen werden regelmäßig als metallisch dichtende Kugelhähne bezeichnet. Diese zeichnen sich durch eine vorteilhafte Kombination aus hoher Dichtleistung und geringem Kontaktverschleiß der Dichtelemente aus.

Es wird darauf verwiesen, dass die Hauptkanal-Dichtelemente und/oder die Zusatz-Dichtelemente auch mehrere elastische Dichtmittel und/oder mehrere metallische Sitzringe aufweisen können, welche in geeigneter Weise ineinandergreifend oder aneinander anliegend angeordnet sind und somit beispielsweise gegeneinander abgestützt sind. Hierdurch kann die Dichtleistung der Dichtelemente weiter erhöht werden und/oder die Montage des Kugelhahns erleichtert werden.

Wenn die Hauptkanal-Dichtelemente und die Zusatz-Dichtelemente beide als metallische Sitzringe mit elastische Dichtmitteln ausgebildet sind, ist es besonders vorteilhaft, die Zusatz-Dichtelemente - wie oben beschrieben - an der Grenze des Schleusenraumes zu dem Hauptkanal-Zuströmabschnitt und dem Hauptkanal-Abströmabschnitt anzuordnen. In diesem Fall ist es möglich, die Zusatz-Dichtelemente derart neben den Hauptkanal-Dichtelementen anzuordnen, dass der Überwachungsraum zu einem schmalen Spalt zwischen einem der Hauptkanal-Dichtelemente und einem der Zusatz-Dichtelemente reduziert ist.

Zusätzlich oder alternativ können die Zusatz-Dichtelemente verschiebbar und arretierbar angeordnet sein. Insbesondere ist es vorteilhaft, die Zusatz-Dichtelemente verschiebbar und/oder arretierbar auszubilden, wenn sie - wie oben beschrieben - im Schleusenraum angeordnet sind. Denn dann steht ein ausreichend großer Raum zur Verfügung, um die Zusatz-Dichtelemente und das Kugelküken ideal zueinander zu positionieren und die Zusatz-Dichtelemente anschließend zu arretieren. Hierdurch kann eine besonders hohe Dichtleistung erzielt werden. Darüber hinaus kann die Montage des Kugelhahns vereinfacht sein, wenn die Zusatz-Dichtelemente verschiebbar und/oder arretierbar in dem Schleusenraum angeordnet sind. Denn dann ist es möglich, in einem ersten Schritt die Zusatz-Dichtelemente in eine Position des Schleusenraumes einzubringen, in welcher sie ein anschließendes Einbringen des Kugelkükens nicht behindern. In einem weiteren Schritt können die Zusatz-Dichtelemente an das in der bestimmungsgemäßen Position gelagerte Kugelküken herangeschoben werden. Durch eine derartige Montage müssen die Zusatz-Dichtelemente und das Kugelküken nicht schon außerhalb des Hahngehäuses in ihrer endgültigen Relativlage zueinander positioniert und gemeinsam in das Hahngehäuse eingebracht werden.

Weiterhin zusätzlich oder alternativ sind Wirkflächen der Hauptkanal-Dichtelemente und/oder Wirkflächen der Zusatz-Dichtelemente derart ausgebildet, dass ein an diesen Dichtelementen anstehendes Fluid einen die Dichtelemente an das Kugelküken pressenden Druck auf die Wirkflächen ausübt. Als Wirkflächen sind grundsätzlich Oberflächenbereiche der Dichtelemente zu verstehen, die im bestimmungsgemäßen Betrieb der Dichtelemente in Kontakt mit einem Fluid stehen und die derart gegenüber der Kugelfläche des Kugelkükens geneigt sind, dass zumindest eine Komponente dieser Oberflächenbereiche im Wesentlichen parallel zur Kugelfläche des Kugelkükens ausgerichtet ist.

In der Summe sind die zur Kugelfläche des Kugelkükens parallelen Komponenten der Wirkflächen, auf welche das Fluid einen Druck in die Richtung des Kugelkükens ausübt, größer als die zur Kugelfläche des Kugelkükens parallelen Komponenten, auf welche das Fluid einen Druck in die dem Kugelküken entgegengesetzte Richtung ausübt. Das Fluid übt somit über die Gesamtheit der Wirkflächen des Dichtelements eine resultierende Kraft auf das Dichtelement aus, die in Richtung des Kugelkükens gerichtet ist. Durch diese resultierende Kraft wird das Dichtelement stets an das Kugelküken gepresst und die Dichtwirkung unter Nutzung des Fluiddrucks verbessert.

Es ist auch möglich, dass zusätzlich oder alternativ elastische Mittel zum Anpressen der Dichtelemente an das Kugelküken vorgesehen sind.

In einer ebenfalls vorteilhaften Ausführungsform des Kugelhahns ist ein erster Druckbeeinflussungskanal mit dem Schleusenraum verbunden, mittels welchem der Schleusenraum im geschlossenen Zustand des Kugelkükens druckentlastbar oder mit Druck beaufschlagbar ist. Ferner ist ein zweiter Druckbeeinflussungskanal mit dem Überwachungsraum verbunden, mittels welchem der Überwachungsraum im geschlossenen Zustand des Kugelkükens druckentlastbar oder mit Druck beaufschlagbar ist.

Der erste Druckbeeinflussungskanal ist insbesondere mit dem ersten Bereich des Schleusenraums verbunden, welcher an der Öffnung zum bedarfsweisen Einschleusen von Medien oder Fluiden angrenzt. Die beiden Druckbeeinflussungskanäle weisen steuerbare Ventile auf, die geöffnet und geschlossen werden können. Wenn das Kugelküken in geschlossener Stellung ist und sich ein Fluid in dem Schleusenraum und/oder dem Überwachungsraum befindet, kann das Fluid durch Öffnen der Ventile abgelassen werden. Dadurch wird der jeweilige Raum, aus dem das Fluid abgelassen wird, druckentlastet.

Es ist auch möglich, den Schleusenraum und/oder den Überwachungsraum aktiv mit Druck zu beaufschlagen. Hierfür kann beispielsweise eine Strömungsmaschine mit den beiden Druckbeeinflussungskanälen zusammenwirken. Wenn mittels der Strömungsmaschinen ein hydrostatischer Druck erzeugt wird und mindestens eins der beiden Ventile an den Druckbeeinflussungskanälen geöffnet ist, wird dieser hydrostatische Druck in dem Raum mit dem geöffneten Ventil aufgebracht.

Diese Ausbildung ist insbesondere vorteilhaft, wenn zusätzlich mindestens ein Überwachungsmittel zum Überwachen des Drucks an der Strömungsmaschine, in dem Überwachungsraum, oder in dem dazwischen angeordneten Druckbeeinflussungskanal angeordnet ist. Denn dann ist ein vorbestimmter Druck in dem Überwachungsraum einstellbar. Durch das Einstellen eines vorbestimmten Drucks in dem Überwachungsraum ist es möglich, die Funktionsfähigkeit der Zusatz-Dichtelemente zu prüfen. Wenn der gemessene, eingestellte Druck in dem Überwachungsraum gegenüber dem vorbestimmten Druck während der Messung sinkt, liegt eine Undichtigkeit an den Zusatz-Dichtelementen vor, die insbesondere durch ein nicht oder nicht mehr korrekt sitzendes oder ein beschädigtes Zusatz-Dichtelement hervorgerufen sein kann. Ein Bediener kann eine derartige Prüfung der Zusatz-Dichtelemente regelmäßig durchführen und diese Dichtelemente austauschen oder deren Sitz korrigieren, wenn sie defekt sind. Die Sicherheit des Bedieners kann hierdurch weiter erhöht werden.

In einer weiteren Ausführungsform weist der Kugelhahn insbesondere mindestens ein gegenüber dem Hahngehäuse herausragendes Stellglied, eine in Einführrichtung eines Molches ausgebildete Verjüngung in dem Kugelküken und/oder ein Sieb in der Durchgangsöffnung auf. Das gegenüber dem Hahngehäuse herausragende Stellglied kann einfach und lösbar mittels einer formschlüssigen und/oder kraftschlüssigen Verbindung mit einem Antrieb zum Verstellen der Stellung des Kugelkükens verbunden werden. Die Ausbildung einer Verjüngung in Einführrichtung eines Molches hat den Vorteil, dass der Molch mittels der Verjüngung beim Einführen "gefangen" und so korrekt innerhalb des Kugelkükens positioniert, d.h. ein zu weites Durchtauchen durch die Öffnung in dem Kugelküken aufgrund der Verjüngung oder aufgrund eines im Bereich der Verjüngung eingesetzten Fanggitters vermieden wird.

Das Sieb in der Durchgangsöffnung kann als ein Filter oder für eine Aufnahme von aus der Fluidleitung auszuschleusenden Gegenständen dienen. Das Sieb ist hierfür besonders gut geeignet, weil es das in der Fluidleitung strömende Fluid durchströmen kann, wohingegen mit dem Fluid strömende Partikel, Verunreinigungen und/oder Gegenstände davon aufgefangen werden.

Der Kugelhahn ist vorzugsweise als ein Molchhahn ausgebildet und/oder ist für mindestens einen der folgenden Parameterbereiche ausgelegt:
- Nennweite der Fluidleitung: 1,27 cm bis 142,24 cm (0,5" Zoll bis 56" Zoll);
- Druck in der Fluidleitung: 10 kPa bis 150.000 kPa (0,1 bis 1.500 bar);
- Temperatur des Fluids in der Fluidleitung: -200°C bis+650°C.

Weitere praktische Ausführungsformen und Vorteile der Erfindung sind nachfolgend im Zusammenhang mit den Zeichnungen beschrieben. Es zeigen:
- Fig. 1: einen erfindungsgemäßen Kugelhahn in einer Seitenansicht auf die verschlossene Öffnung zum bedarfsweisen Einschleusen von Medien oder Gegenständen;
- Fig. 2: den Kugelhahn aus Fig. 1 in einer Draufsicht;
- Fig. 3: den Kugelhahn aus Fig. 1 in einer Ansicht entlang Schnittlinie A-A mit dem Kugelküken in geschlossener Stellung;
- Fig. 4: den Kugelhahn aus Fig. 2 in einer Ansicht entlang Schnittlinie C-C mit dem Kugelküken in geschlossener Stellung;
- Fig. 5: den Kugelhahn aus Fig. 2 in einer Ansicht entlang Schnittlinie B-B mit dem Kugelküken in geschlossener Stellung;
- Fig. 6a: den Detailausschnitt X des Kugelhahns aus Fig. 4;
- Fig. 6b: den Detailausschnitt Z des Kugelhahns aus Fig. 5;
- Fig. 7: Möglichkeiten für mehrere weitere Ausführungsformen eines erfindungsgemäßen Kugelhahns, insbesondere mit Zusatz-Dichtelementen, die in gleicher Orientierung wie die Hauptkanal-Dichtelemente angeordnet sind.

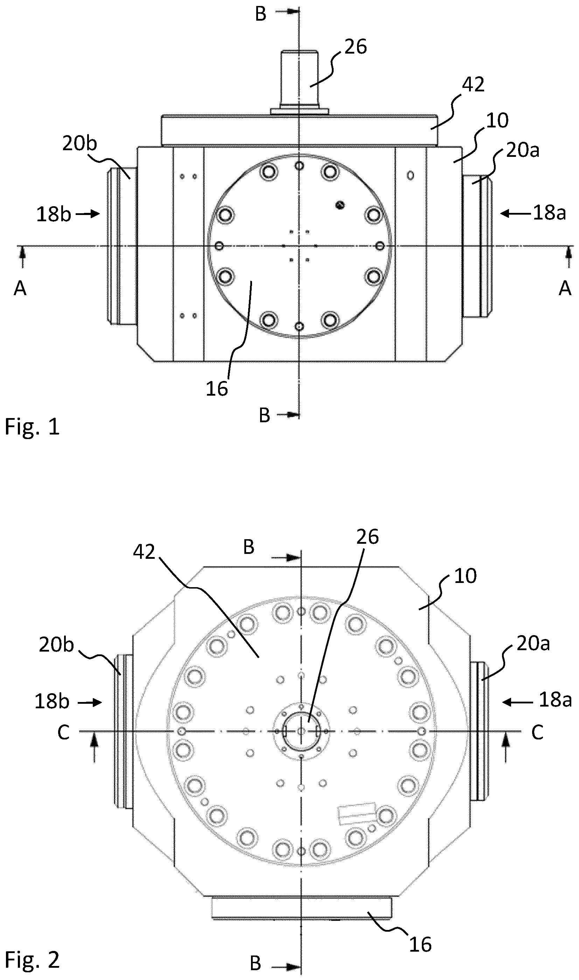

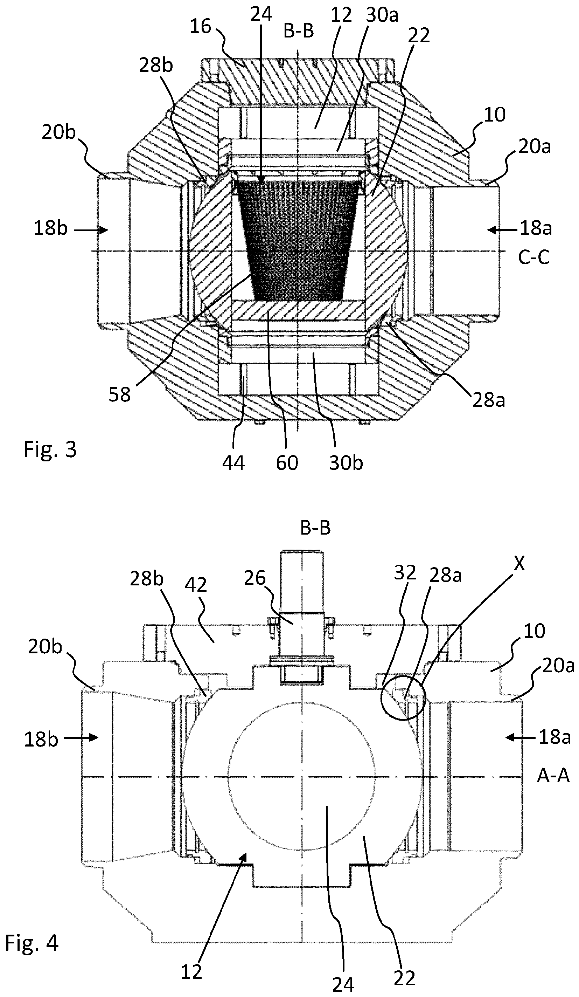

Die Figuren 1 und 2 zeigen eine Ausführungsform des erfindungsgemäßen Kugelhahns in einer Seitenansicht (Fig. 1) und in einer Ansicht von oben (Fig. 2) jeweils von außen. Der Kugelhahn weist ein - hier im Wesentlichen polyedrisch ausgebildetes - Hahngehäuse 10 auf. Im Inneren ist ein Schleusenraum 12 ausgebildet ist (vgl. Fig. 3).

Der Schleusenraum 12 ist durch eine Öffnung 14 zum bedarfsweisen Einschleusen von Medien oder Gegenständen von außerhalb des Kugelhahns zugänglich. In den Figuren 1 und 2 ist die Öffnung 14 nicht sichtbar, da sie mittels eines abnehmbaren Schleusenverschlusses 16 verschlossen ist. In dem Hahngehäuse 10 sind ferner ein Hauptkanal-Zuströmabschnitt 18a und ein Hauptkanal-Abströmabschnitt 18b angeordnet, welche jeweils einen von dem Hahngehäuse 10 hervorragenden Anschlussstutzen 20a, 20b aufweisen. Mittels den Anschlussstutzen 20a, 20b ist der Kugelhahn in eine Fluidleitung (nicht dargestellt) integrierbar.

Die Figuren 3, 4 und 5 zeigen das Innere des Kugelhahns gemäß der in den Figuren 1 und 2 eingetragenen Schnittlinien A-A, B-B bzw. C-C. Identische Elemente des Kugelhahns sind in den Figuren 3 - 6 mit den gleichen Bezugszeichen versehen wie in den Figuren 1 und 2.

In der gezeigten Schnittdarstellung des Kugelhahns in Figur 3 sind mittig in dem Kugelhahn der Hauptkanal-Zuströmabschnitt 18a und der diesem fluchtend gegenüberliegende Hauptkanal-Abströmabschnitt 18b gezeigt.

Alternativ ist es auch möglich, dass der Hauptkanal-Zuströmabschnitt 18a und der Hauptkanal-Abströmabschnitt 18b - insbesondere geringfügig - versetzt zueinander angeordnet oder ausgebildet sind und/oder zueinander geneigte Orientierungen (Hauptströmungsrichtungen) aufweisen.

Orthogonal orientiert zu dem in Figur 3 gezeigten Hauptkanal-Zuströmabschnitt 18a und dem Hauptkanal-Abströmabschnitt 18b ist der Schleusenraum 12 mit der Öffnung 14 und dem Schleusenverschluss 16 angeordnet. Der Hauptkanal-Zuströmabschnitt 18a und der Hauptkanal-Abströmabschnitt 18b münden ungefähr mittig in dem Schleusenraum 12, so dass der Hauptkanal-Zuströmabschnitt 18a, der Hauptkanal-Abströmabschnitt 18b und der Schleusenraum 12 einen Kreuzungsabschnitt in dem Hahngehäuse 10 bilden. Mittig in dem Schleusenraum 12 bzw. in dem Kreuzungsabschnitt ist ein im Wesentlichen kugelförmiges Kugelküken 22 angeordnet. Die Kugelform des Kugelkükens 22 ist insbesondere aus einer Zusammenschau der Figuren 3 und 4 ersichtlich. Das Kugelküken 22 befindet sich in den Figuren 3, 4 und 5 in einer geschlossenen Stellung. In dieser geschlossenen Stellung ist eine das Kugelküken 22 vollständig durchdringende Durchgangsöffnung 24 in Richtung der Öffnung 14 ausgerichtet.

Eine die Durchgangsöffnung 24 umgreifende Wandung des im Wesentlichen kugelförmigen Kugelkükens 22 ragt in der geschlossenen Stellung des Kugelkükens 22 zumindest teilweise in den Hauptkanal-Zuströmabschnitt 18a und in den Hauptkanal-Abströmabschnitt 18b derart hinein, dass der Hauptkanal-Zuströmabschnitt 18a und der Hauptkanal-Abströmabschnitt 18b davon abgedeckt sind. Der Hauptkanal-Zuströmabschnitt 18a und der Hauptkanal-Abströmabschnitt 18b sind somit in der in den Figuren 3, 4 und 5 gezeigten, geschlossenen Stellung des Kugelkükens 22 fluidal voneinander separiert.

Alternativ können in dem Kugelküken 22 Bypassbohrungen (nicht dargestellt) ausgebildet sein, um so zu erreichen, dass ein kleinerer Anteil eines Mediums weiterhin durch das Kugelküken 22 von dem Hauptkanal-Zuströmabschnitt 18a in den Hauptkanal-Abströmabschnitt 18b fließt. Dazu sind insbesondere mindestens eine Bohrung von der Seite des Hauptkanal-Zuströmabschnitts 18a und eine Bohrung von dem Hauptkanal-Abströmabschnitt 18b aus vorgesehen, die sich treffen und so einen Bypass bilden. Es können auch zwei oder mehrere solcher Bypässe ausgebildet sein. Diese Ausführungsform ist insbesondere für solche Medien sinnvoll, deren kontinuierlicher Fluss von großer Bedeutung ist, da sie sonst erstarren oder sich in anderer Art und Weise ungünstig auf den Gesamtprozess auswirken.

An das Kugelküken 22 angrenzend ist eine Mehrzahl von Dichtelementen 28a, 28b, 30a, 30b angeordnet (vgl. Figuren 3 und 4). Die Dichtelemente 28a, 28b sind Hauptkanal-Dichtelemente. In den Figuren 3 und 4 ist zu erkennen, dass die Hauptkanal-Dichtelemente 28a, 28b den Schleusenraum 12 gegenüber dem Hauptkanal-Zuströmabschnitt 18a bzw. dem Hauptkanal-Abströmabschnitt 18b abdichtend angeordnet sind. Für diesen Zweck sind die Hauptkanal-Dichtelemente 28a, 28b als metallische Sitzringe mit elastischen Dichtmitteln ausgebildet und derart zwischen dem Kugelküken 22 und der Innenwand des Hauptkanal-Zuströmabschnitts 18a bzw. zwischen dem Kugelküken 22 und der Innenwand des Hauptkanal-Abströmabschnitts 18b angeordnet, dass kein Fluid aus dem Hauptkanal-Zuströmabschnitt 18a oder dem Hauptkanal-Abströmabschnitt 18b an dem Kugelküken 22 vorbei in den Schleusenraum 12 strömen kann. Weitere Details zu den Hauptkanal-Dichtelementen 28a, 28b sind im Folgenden erläutert.

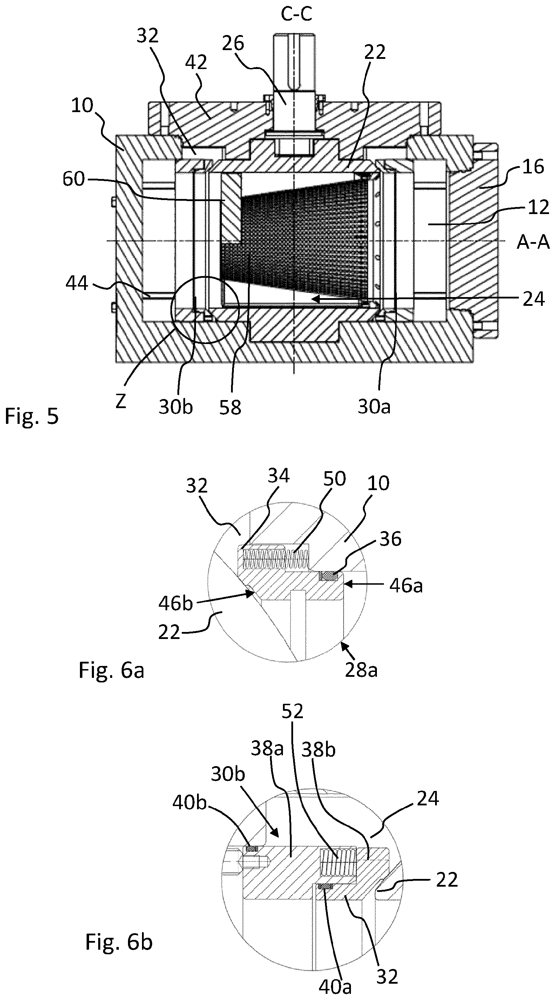

Die Dichtelemente 30a, 30b sind Zusatz-Dichtelemente, mittels welchen ein Überwachungsraum 32 von dem Schleusenraum 12 abgegrenzt ist. Der Schleusenraum ist somit unterteilt in einen ersten Bereich, der an die Öffnung 14 angrenzt, und in einen zweiten Bereich, welcher als Überwachungsraum 32 dient. Der Überwachungsraum 32 ist in den in den Figuren 4 und 5 dargestellten Querschnittsansichten des Kugelhahns im Wesentlichen links und rechts oben sowie links und rechts unten neben dem Kugelküken 22 zu erkennen. In Figur 3 ist der Überwachungsraum nicht zu erkennen, da die in Figur 3 gezeigte Schnittebene die Äquatorialebene des Kugelkükens ist, in welcher das Kugelküken 22 im Wesentlichen den gesamten Querschnitt des Überwachungsraums 32 einnimmt. Der Überwachungsraum 32 ist derart ausgebildet, dass ein Fluid ausschließlich in diesen Überwachungsraum 32 einströmen kann, falls die Hauptkanal-Dichtelemente 28a, 28b nicht ordnungsgemäß dichten. Da die Zusatz-Dichtelemente 30a, 30b den ersten Bereich des Schleusenraumes 12 gegen den Überwachungsraum 32 abdichten, kann das Fluid nicht von dem Überwachungsraum 32 in den ersten Bereich des Schleusenraums 12 einströmen. Somit besteht für einen Bediener des Kugelhahns selbst dann keine Gefahr, wenn die Hauptkanal-Dichtelemente 28a, 28b bei geöffnetem Schleusenverschluss 16 versagen.

Die Zusatz-Dichtelemente 30a, 30b sind in dieser Ausführungsform verschiebbar und arretierbar in dem Schleusenraum 12 angeordnet. In den Figuren 3 und 5 sind neben den Zusatz-Dichtelementen 30a, 30b Nutzräume in dem Schleusenraum 12 zu erkennen, deren Größe in etwa der Größe der Zusatz-Dichtelemente 30a, 30b entspricht. In diesen Nutzräumen sind Führungsvorrichtungen 44 vorgesehen, welche beispielsweise als Führungsnute oder Führungsschienen ausgebildet sein können. Entlang der Führungsvorrichtungen 44 können die Zusatz-Dichtelemente 30a, 30b aus der in den Figuren 3 und 5 gezeigten Position in die Nutzräume verschoben und zurückgeschoben werden.

Die Zusatz-Dichtelemente 30a, 30b können separat von dem Kugelküken 22 durch eine in den Figuren 4 und 5 dargestellte zweite, mit einem Gehäusedeckel 42 verschließbare Öffnung am oberen Bereich des Hahngehäuses 10 in den Schleusenraum 12 eingebracht und in die Nutzräume geschoben werden. In einem weiteren Schritt kann das Kugelküken 22 ebenfalls durch die zweite Öffnung in den Schleusenraum 12 eingebracht werden. Anschließend kann das Stellglied 26 kraftschlüssig und/oder formschlüssig mit dem Kugelküken 22 verbunden und der Gehäusedeckel 42 derart von oben auf das Hahngehäuse 10 und das Stellglied 26 gesetzt werden, dass das Stellglied 26 den Gehäusedeckel 42 durchragt und die Öffnung am oberen Bereich des Hahngehäuses 10 gasdicht durch den Gehäusedeckel 42 verschlossen ist. Dadurch ist das Kugelküken 22 in der funktionsgemäßen Position sicher gelagert. Anschließend können die Zusatz-Dichtelemente 30a, 30b entlang der Führungsvorrichtung 44 an das Kugelküken 22 herangeschoben werden. Dadurch sind die Zusatz-Dichtelemente 30a, 30b ideal zum Kugelküken 22 positionierbar. Eine ideale Positionierung ist erreicht, wenn die Zusatz-Dichtelemente 30a, 30b gleichmäßig an das Kugelküken 22 und die Innenwand des Schleusenraumes 12 angedrückt werden, so dass eine besonders gleichmäßige und gute Dichtleistung erzielt wird. In der idealen Position können die Zusatz-Dichtelemente 30a, 30b abschließend sicher arretiert werden. Durch die vorstehend beschrieben Ausbildung des Kugelkükens 22 und eine dadurch erzielbare Montage ist auch ein Nachjustieren der Positionen des Kugelkükens 22 und der Zusatz-Dichtelemente 30a, 30b im integrierten Zustand des Kugelhahns in einer Fluidleitung möglich.

Ein erster Druckbeeinflussungskanal, welcher mit dem Schleusenraum 12 verbunden ist, mittels welchem der Schleusenraum 12 im geschlossenen Zustand des Kugelkükens 22 druckentlastbar oder mit Druck beaufschlagbar ist, ist in den Figuren nicht dargestellt.

Ein zweiter Druckbeeinflussungskanal, der mit dem Überwachungsraum 32 verbunden ist, mittels welchem der Überwachungsraum 32 im geschlossenen Zustand des Kugelkükens 22 druckentlastbar oder mit Druck beaufschlagbar ist, ist in den Figuren ebenfalls nicht dargestellt.

Alternativ oder zusätzlich ist es auch möglich, dass die Zusatz-Dichtelemente 30a, 30b nicht wie oben beschrieben im Schleusenraum am Kugelküken 22 angeordnet sind, sondern dass die Zusatz-Dichtelemente 30a, 30b an dem Grenzbereich zwischen dem Schleusenraum 12 und dem Hauptkanal-Zuströmabschnitt 18a bzw. an dem Grenzbereich zwischen dem Schleusenraum 12 und dem Hauptkanal-Abströmabschnitt 18b angeordnet sind (nicht dargestellt). Die Zusatz-Dichtelemente 30a, 30b befinden sich dann auf der dem Hauptkanal-Zuströmabschnitt 18a bzw. dem Hauptkanal-Abströmabschnitt 18b abgewandten Seite der Hauptkanal-Dichtelemente 28a, 28b. In diesem Fall sind zwei separate, ringförmige Überwachungsräume gebildet, von denen einer an den Bereich des Hauptkanal-Zuströmabschnitts 18a und einer an den Bereich des Hauptkanal-Abströmabschnitts 18b angrenzt.

In den Figuren 3, 4 und 5 ist in der Durchgangsöffnung 24 ein Sieb 58 zu erkennen. Die äußere Form des Siebes 58 entspricht einem Kegelstumpf, dessen größter Durchmesser ungefähr dem Innendurchmesser der Durchgangsöffnung 24 entspricht. An dem kleinsten Durchmesser des Siebes ist das Sieb gegen eine Siebaufnahme 60 positionsfest in dem Kugelküken 22 gelagert. Wenn das Kugelküken 22 in der geöffneten Stellung ist, können von dem Hauptkanal-Zuströmabschnitt 18a durch das Kugelküken 22 strömende Flüssigkeiten und/oder Gase das in der Durchgangsöffnung 24 angeordnete Sieb 58 durchdringen, wohingegen Verunreinigungen, Partikel und/oder Gegenstände von dem Sieb 58 aufgenommen werden. Wenn das Kugelküken 22 in der geschlossenen Stellung ist, kann das Sieb 58 und/oder die von dem Sieb 58 aufgenommenen Verunreinigungen, Partikel und/oder Gegenstände über die Öffnung 14 entnommen werden.

In Figur 6a ist eine mögliche Ausführungsform des Hauptkanal-Dichtelements 28a gezeigt. Das Hauptkanal-Dichtelement 28b ist identisch ausgebildet. Anhand von Figur 6a ist zu erkennen, dass das Hauptkanal-Dichtelement 28a einen metallischen Sitzring 34, ein als O-Ring ausgebildetes elastisches Dichtmittel 36 sowie eine Feder 50 aufweisen kann. Der O-Ring 36 dichtet das Hauptkanal-Dichtelement 28a gegen das Hahngehäuse 10 ab. Die Feder drückt den Sitzring 34 gegen das Kugelküken 22. An dem Sitzring sind Wirkflächen 46a, 46b, auf die das an dem Hauptkanal-Dichtelements 28a anstehende Fluid wirkt, derart ausgebildet, dass eine effektive Kraft den Sitzring 34 gegen das Kugelküken 22 drückt. Zu diesem Zweck ist die Komponente der Wirkfläche 46a, über welche das Fluid einen Druck auf den Sitzring 34 in die Richtung des Kugelkükens 22 ausübt, größer als die Komponente der Wirkfläche 46b, über welche das Fluid einen Druck auf den Sitzring 34 in die dem Kugelküken 22 entgegengesetzte Richtung ausübt.

In Figur 6b ist eine mögliche Ausführungsform des Zusatz-Dichtelements 30b gezeigt. Das Zusatz-Dichtelement 30a ist identisch ausgebildet. Anhand von Figur 6b ist zu erkennen, dass das Zusatz-Dichtelement 30b zwei metallische Sitzringe 38a, 38b aufweisen kann. Der zweite Sitzring 38b des Zusatz-Dichtelements 30b ist mittels einer Feder 52 gegen den ersten Sitzring 38a des Zusatz-Dichtelements 30b abgestützt. Zwischen dem Sitzring 38a des Zusatz-Dichtelements 30b und dem zweiten Sitzring 38b des Zusatz-Dichtelements 30b ist ferner ein erstes als O-Ring ausgebildetes elastisches Dichtmittel 40a des Zusatz-Dichtelements 30b angeordnet. Durch den ersten Sitzring 38a des Zusatz-Dichtelements 30b und die Feder 52 wird der zweite Sitzring 38b des Zusatz-Dichtelements 30b gegen das Kugelküken 22 gedrückt. Zwischen dem ersten Sitzring 38a des Zusatz-Dichtelements 30b und der Innenwand des Schleusenraumes 12 ist ferner ein zweites, als O-Ring ausgebildetes elastisches Dichtmittel 40b des Zusatz-Dichtelements 30b angeordnet.

Der erste Sitzring 38a des Zusatz-Dichtelements 30b kann beispielsweise durch Verwendung von Gewindestangen (nicht dargestellt), welche von außen durch das Hahngehäuse auf den ersten Sitzring 38a des Zusatz-Dichtelements 30b drücken, in dem Hahngehäuse 10 arretiert werden. Durch eine Ausbildung der Zusatz-Dichtelemente 30a, 30b wie vorstehend beschrieben kann ein besonders homogener Druck auf die zweiten Sitzringe 38b der Zusatz-Dichtelemente 30a, 30b ausgeübt werden, wodurch sich eine geeignete, druckangepasste Dichtwirkung der Zusatz-Dichtelemente30, 30b ergibt. Zusätzlich sind auch bei den zweiten Sitzringen 38b der Zusatz-Dichtelemente 30a,30 Wirkflächen 48a, 48b derart ausgebildet, dass ein auf diese Sitzringe wirkendes Fluid die zweiten Sitzringe 38b gegen das Kugelküken 22 drückt.

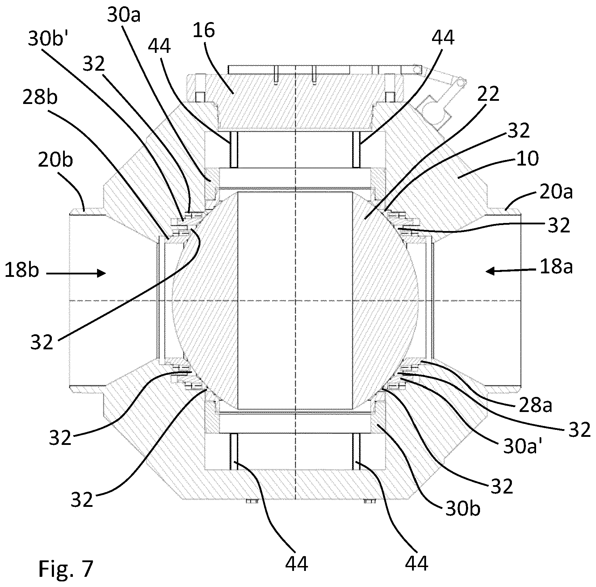

In Figur 7 sind mehrere Möglichkeiten für weitere Ausführungsformen in einer Zeichnung dargestellt, die im Folgenden erläutert werden. Dabei werden für identische oder zumindest funktionsgleiche Elemente die gleichen Bezugszeichen wie in den Figuren 1-6 verwendet.

Figur 7 zeigt ein Hahngehäuse 10 in einer Schnittdarstellung analog zu der Darstellung in Figur 3. Auf der in Figur 7 nach oben weisenden Seite des Hahngehäuses 10 ist ein Schleusenverschluss 16 angeordnet, der bedarfsweise geöffnet werden kann.

In dem Bereich des Hauptkanal-Zuströmabschnitts 18a und in dem Bereich des Hauptkanal-Abströmabschnitts 18b des Hahngehäuses 10 sind zwischen dem Hahngehäuse 10 und dem Kugelküken 22 jeweils ein inneres Hauptkanal-Dichtelement 28a, 28b angeordnet. Diese können ein- oder mehrteilig ausgebildet sein.

Wie in Figur 7 erkennbar, sind radial etwas weiter außenseitig dieser Hauptkanal-Dichtelemente 28a, 28b korrespondierende Hauptkanal-Zusatz-Dichtelemente 30a', 30b' angeordnet. Diese sind derart gestaltet, dass sich zwischen den Hauptkanal-Dichtelementen 28a, 28b und den Hauptkanal-Zusatz-Dichtelementen 30a', 30b' jeweils ein Überwachungsraum 32 ausbildet, d.h. ein abgeschlossener Druckraum, in welchen bei ordnungsgemäßer Funktion der Hauptkanal-Dichtelemente 28a, 28b in der in Figur 7 gezeigten geschlossenen Stellung kein Fluid gelangt. Dementsprechend ist zwischen den Hauptkanal-Dichtelementen 28a, 28b und den Hauptkanal-Zusatz-Dichtelementen 30a', 30b'ein Überwachungsraum 32 im Sinne der Erfindung ausgebildet.

Zusätzlich sind in einer Orientierung quer zur Hauptströmungsrichtung - wie in der in Figur 3 gezeigten Ausführungsform - Zusatz-Dichtelemente 30a, 30b auf der zum Schleusenverschluss 16 orientierten Seite des Hahngehäuses 10 sowie auf der gegenüberliegenden Seite des Hahngehäuses 10 angeordnet. Wenn die Zusatz-Dichtelemente 30a, 30b zusätzlich zu den vorstehend genannten Hauptkanal-Zusatz-Dichtelementen 30a', 30b' vorgesehen sind, ist zwischen diesen, dem Kugelküken 22 und dem Hahngehäuse 10 ein weiterer Überwachungsraum 32 ausgebildet.

So können in einem erfindungsgemäßen Hahngehäuse 10 zwei oder mehr Überwachungsräume 32 vorgesehen sein, um das Bedienrisiko eines Kugelhahns 22 zu reduzieren, insbesondere während eines geöffneten Schleusenverschlusses (16).

Insbesondere wird noch auf folgende vorteilhafte Gestaltungsvarianten verwiesen, die - soweit nicht aus logischen Gründen ausgeschlossen - einzeln oder in Kombination realisiert sein können.

Durch eine Anordnung mit Hauptkanal-Dichtelementen 28a, 28b und Hauptkanal-Zusatz-Dichtelementen 30a' und 30b', die wie in Figur 3 gezeigt, beide gleich orientiert und dadurch mit geringem Abstand zueinander anordenbar sind, lässt sich mit geringem konstruktiven Aufwand das Volumen des Überwachungsraumes 32 klein halten. Dadurch ergibt sich eine kurze Ansprechzeit für den Fall, dass ein Dichtelement 28a, 28b, 30a', 30b' nicht ordnungsgemäß funktioniert.

Alle Dichtelemente 28a, 28b, alle Hauptkanal-Zusatz-Dichtelemente 30a', 30b' und alle Zusatz-Dichtelemente 30a, 30b können einteilig oder mehrteilig ausgebildet sein. In der in Figur 7 gezeigten Ausführungsform sind die Hauptkanal-Dichtelemente 28a, 28b und Hauptkanal- Zusatz-Dichtelemente 30a', 30b' jeweils einteilig ausgebildet, während die Zusatz-Dichtelemente 30a, 30b zweiteilig ausgebildet sind.

Unabhängig von der ein- oder mehrteiligen Ausbildung sind die genannten Dichtelemente 28a, 28b, 30a', 30b', 30a, 30b vorzugsweise mit einem Vorspannelement versehen, um mit einer Vorspannkraft in Richtung des Kugelkükens 22 gedrückt zu werden. Dies kann insbesondere mittels einer Feder 50, 52, mittels eines nicht dargestellten Elastomerelements und/oder mittels Graphitelementen bewirkt werden.

Von dem Überwachungsraum 32 aus kann ein durch das Hahngehäuse 10 nach außen führender Kanal (nicht dargestellt) ausgebildet sein. Dieser kann entweder zur Drucküberwachung genutzt oder alternativ mit einer Dichtmittelinjektion gefüllt werden, wobei das Dichtmittel vorzugsweise derart ausgebildet ist, dass es bei Überschreiten eines vorgegebenen Drucks aus dem Kanal austritt, so dass für eine Bedienperson ersichtlich ist, dass in dem Überwachungsraum 32 ein erhöhter Druck vorliegt und dementsprechend der Schleusenverschluss 16 schnellstmöglich geschlossen werden sollte, sofern er geöffnet ist.

Wenn - wie in Figur 7 dargestellt - mehrere Überwachungsräume 32 vorgesehen sind, kann es vorteilhaft sein, Zusatz-Dichtelemente 30a, 30b, 30a', 30b' aus unterschiedlichen Werkstoffen so kaskadenartig hintereinander anzuordnen, dass die Wahrscheinlichkeit eines Versagens aller Zusatz-Dichtelemente 30a, 30b, 30a', 30b' gering gehalten wird, weil beispielsweise ein Werkstoff der Kaskade eine besonders hohe Temperaturbeständigkeit aufweist und ein anderer Werkstoff besonders vorteilhafte Eigenschaften hinsichtlich einer chemischen Beständigkeit aufweist. Insbesondere wird in diesem Zusammenhang auf die kaskadenartige Anordnung von Dichtelementen 30a, 30b, 30a', 30b' aus metallischen und nicht-metallischen Werkstoffen in einer Kaskade verwiesen.

Durch das Vorsehen mehrerer Überwachungsräume 32 in einer Kaskade und durch das Vorsehen von Überwachungsräumen 32 mit großem Abstand der Dichtelemente 30a, 30b, 30a', 30b' zueinander, wie z.B. bei der Ausführungsform gemäß den Figuren 1-6, kann die Wahrscheinlichkeit gering gehalten werden, dass bedingt durch mechanische Beschädigungen auf der Oberfläche des Kugelkükens 22, wie z.B. Riefen, die Sicherheit einer Bedienperson bei geöffnetem Schleusenverschluss 16 gefährdet wird. Oder anders ausgedrückt ergibt sich in diesem Fall eine hohe Wahrscheinlichkeit dafür, dass es nicht zu einem mittels des entsprechenden Überwachungsraums 32 detektierten Sicherheitsproblems kommt, d.h. die erwartete Standzeit des Kugelhahns ist besonders hoch und die Ausfallwahrscheinlichkeit niedrig.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Hahngehäuse
- 12: Schleusenraum
- 14: Öffnung zum bedarfsweisen Einschleusen
- 16: Schleusenverschluss
- 18a: Hauptkanal-Zuströmabschnitt
- 18b: Hauptkanal-Abströmabschnitt
- 20a, 20b: Anschlussstutzen
- 22: Kugelküken
- 24: Durchgangsöffnung
- 26: Stellglied
- 28a, 28b: Hauptkanal-Dichtelemente
- 30a, 30b: Zusatz-Dichtelemente
- 30 a', 30b': Hauptkanal-Zusatz-Dichtelemente
- 32: Überwachungsraum
- 34: metallischer Sitzring des rechten Hauptkanal-Dichtelements
- 36: elastisches Dichtmittel des rechten Hauptkanal-Dichtelements, O-Ring
- 38a, 38b: metallischer Sitzring des hinteren Zusatz-Dichtelements
- 40a, 40b: elastisches Dichtmittel des hinteren Zusatz-Dichtelements, O-Ring
- 42: Gehäusedeckel
- 44: Führungsvorrichtung
- 46a, 46b: Wirkflächen des rechten Hauptkanal-Dichtelements
- 48a, 48b: Wirkflächen des hinteren Zusatz-Dichtelements
- 50: Feder im rechten Hauptkanal-Dichtelement
- 52: Feder in hinterem Zusatz-Dichtelement
- 58: Sieb
- 60: Siebaufnahme

## Patentansprüche

1. Kugelhahn mit
- einem Hahngehäuse (10);
- einem Schleusenraum (12) zum bedarfsweisen Einschleusen von Gegenständen oder Medien;
- einem in dem Schleusenraum (12) drehbar gelagerten Kugelküken (22), welches eine quer zur Drehachse orientierte Durchgangsöffnung (24) aufweist und über ein Stellglied (26) derart drehbar angeordnet ist, dass das Kugelküken (22) in mindestens eine geöffnete Stellung und in mindestens eine geschlossene Stellung bringbar ist;
- mindestens einem Hauptkanal-Zuströmabschnitt (18a) und mindestens einem Hauptkanal-Abströmabschnitt (18b) zur Integration des Kugelhahns in eine Fluidleitung,
- wobei der Hauptkanal-Zuströmabschnitt (18a) und der Hauptkanal-Abströmabschnitt (18b) in der geöffneten Stellung des Kugelkükens (22) mittels der Durchgangsöffnung (24) durchströmbar verbunden sind und in der geschlossenen Stellung des Kugelkükens (22) der Hauptkanal-Zuströmabschnitt (18a) und der Hauptkanal-Abströmabschnitt (18b) fluidal separiert sind oder der Durchfluss vom Hauptkanal-Zuströmabschnitt (18a) in den Hauptkanal-Abströmabschnitt (18b) über mindestens einen Bypass zumindest gedrosselt ist, während die Durchgangsöffnung (24) über den Schleusenraum (12) von außen zugänglich ist; und
- Hauptkanal-Dichtelementen (28a, 28b), mittels welchen bei geschlossener Stellung des Kugelkükens (22) der Schleusenraum (12) gegenüber dem Hauptkanal-Zuströmabschnitt (18a) und dem Hauptkanal-Abströmabschnitt (18b) abgedichtet ist,
**dadurch gekennzeichnet, dass**
Zusatz-Dichtelemente (30a, 30b, 30a', 30b') derart vorgesehen sind, dass ein in der geschlossenen Stellung des Kugelkükens (22) abgedichteter Überwachungsraum (32) zum Überwachen einer ordnungsgemäßen Funktion der Hauptkanal-Dichtelemente (28a, 28b) innerhalb des Schleusenraumes (12) gebildet ist.

2. Kugelhahn nach dem vorstehenden Anspruch, **dadurch gekennzeichnet, dass** der Hauptkanal-Zuströmabschnitt (18a), der Hauptkanal-Abströmabschnitt (18b) und der Schleusenraum (12) in dem Hahngehäuse (10) angeordnet sind, wobei der Schleusenraum (12) orthogonal zu dem Hauptkanal-Zuströmabschnitt (18a) und/oder dem Hauptkanal-Abströmabschnitt (18b) orientiert ist.

3. Kugelhahn nach einem der vorstehenden Ansprüche, **dadurch gekennzeichnet, dass** die Zusatz-Dichtelemente (30a, 30b, 30a', 30b') in mindestens einem der beiden folgenden Bereiche angeordnet sind:
- in dem Schleusenraum (12),
- an der Grenze des Schleusenraumes (12) zu dem Hauptkanal-Zuströmabschnitt (28a) und dem Hauptkanal-Abströmabschnitt (28b).

4. Kugelhahn nach einem der vorstehenden Ansprüche, **dadurch gekennzeichnet, dass** Überwachungsmittel zum Überwachen eines Zustandes des Überwachungsraumes (12) vorgesehen sind.

5. Kugelhahn nach einem der vorstehenden Ansprüche, **dadurch gekennzeichnet, dass** das Hahngehäuse (10) einen Gehäusedeckel (42) und/oder einen Schleusenverschluss (16) zum Verschließen des Schleusenraumes (12) aufweist.

6. Kugelhahn nach einem der vorstehenden Ansprüche, **dadurch gekennzeichnet, dass** die Hauptkanal-Dichtelemente (28a, 28b) und/oder die Zusatz-Dichtelemente (30a, 30b, 30a', 30b') jeweils zumindest einen metallischen Sitzring (38a, 38b) und/oder ein elastisches Dichtmittel (40a, 40b) aufweisen.

7. Kugelhahn nach einem der vorstehenden Ansprüche, **dadurch gekennzeichnet, dass** die Zusatz-Dichtelemente (30a, 30b, 30a', 30b') verschiebbar und/oder arretierbar angeordnet sind.

8. Kugelhahn nach einem der vorstehenden Ansprüche, **dadurch gekennzeichnet, dass** Wirkflächen (46a, 46b) der Hauptkanal-Dichtelemente (28a, 28b) und/oder Wirkflächen (48a, 48b) der Zusatz-Dichtelemente (30a, 30b, 30a', 30b') derart ausgebildet sind, dass ein an diesen Dichtelementen (28a, 28b, 30a, 30b, 30a', 30b') anstehendes Fluid einen die Dichtelemente (28a, 28b, 30a, 30b, 30a', 30b') an das Kugelküken (22) pressenden Druck auf die Wirkflächen (46a, 46b, 48a, 48b) ausübt.

9. Kugelhahn nach einem der vorstehenden Ansprüche, **dadurch gekennzeichnet, dass** ein erster Druckbeeinflussungskanal mit dem Schleusenraum (12) verbunden ist, mittels welchem der Schleusenraum (12) im geschlossenen Zustand des Kugelkükens (22) druckentlastbar oder mit Druck beaufschlagbar ist, und dass ein zweiter Druckbeeinflussungskanal mit dem Überwachungsraum (32) verbunden ist, mittels welchem der Überwachungsraum (32) im geschlossenen Zustand des Kugelkükens (22) druckentlastbar oder mit Druck beaufschlagbar ist.

10. Kugelhahn nach einem der vorstehenden Ansprüche, **dadurch gekennzeichnet, dass** mindestens eines der folgenden Elemente vorgesehen ist:
- ein gegenüber dem Hahngehäuse (10) herausragendes Stellglied (26);
- eine in Einführrichtung eines Molches ausgebildete Verjüngung in dem Kugelküken (22) und/oder
- ein Sieb (58) in der Durchgangsöffnung (24).
und/oder dass der Kugelhahn als ein Molchhahn ausgebildet ist und/oder der Kugelhahn für mindestens einen der folgenden Parameterbereiche ausgelegt ist:
- Nennweite der Fluidleitung: 1,27 cm bis 142,24 cm (0,5" bis 56");
- Druck in der Fluidleitung: 10 kPa bis 150.000 kPa (0,1 bis 1500 bar);
- Temperatur des Fluids in der Fluidleitung: -200°C bis +650°C.

## Claims

1. Ball valve with
- a valve housing (10);
- a lock chamber (12) for entering objects or media as required;
- a ball plug (22) which is rotatably mounted in the lock chamber (12), has a passage opening (24) orientated transversely to the axis of rotation and is arranged rotatably via an actuator (26) in such a way that the ball plug (22) can be brought into at least one open position and into at least one closed position;
- at least one main channel inflow section (18a) and at least one main channel outflow section (18b) for integrating the ball valve into a fluid line,
- wherein the main channel inflow section (18a) and the main channel outflow section (18b), in the open position of the ball plug (22), are connected in such a way that flow can pass through them by means of the passage opening (24) and, in the closed position of the ball plug (22), the main channel inflow section (18a) and the main channel outflow section (18b) are separated with respect to flow or the flow from the main channel inflow section (18a) into the main channel outflow section (18b) is at least throttled via at least one bypass, while the passage opening (24) is accessible from the outside via the lock chamber (12); and
- main channel sealing elements (28a, 28b), by means of which, when the ball plug (22) is in the closed position, the lock chamber (12) is sealed with respect to the main channel inflow section (18a) and the main channel outflow section (18b),
**characterized in that**
additional sealing elements (30a, 30b, 30a', 30b') are provided in such a way that a monitoring chamber (32) sealed in the closed position of the ball plug (22) is formed for monitoring proper functioning of the main channel sealing elements (28a, 28b) within the lock chamber (12).

2. Ball valve according to the preceding claim, **characterized in that** the main channel inflow section (18a), the main channel outflow section (18b) and the lock chamber (12) are arranged in the valve housing (10), wherein the lock chamber (12) is oriented orthogonally to the main channel inflow section (18a) and/or the main channel outflow section (18b).

3. Ball valve according to one of the preceding claims, **characterized in that** the additional sealing elements (30a, 30b, 30a', 30b') are arranged in at least one of the two following regions:
- in the lock chamber (12),
- at the boundary of the lock chamber (12) to the main channel inflow section (28a) and the main channel outflow section (28b).

4. Ball valve according to one of the preceding claims, **characterized in that** monitoring means are provided for monitoring a state of the monitoring chamber (32).

5. Ball valve according to one of the preceding claims, **characterized in that** the valve housing (10) has a housing cover (42) and/or a lock closure (16) for closing the lock chamber (12).

6. Ball valve according to one of the preceding claims, **characterized in that** the main channel sealing elements (28a, 28b) and/or the additional sealing elements (30a, 30b, 30a', 30b') each have at least one metal seat ring (38a, 38b) and/or an elastic sealant (40a, 40b).

7. Ball valve according to one of the preceding claims, **characterized in that** the additional sealing elements (30a, 30b, 30a', 30b') are arranged to be displaceable and/or lockable.

8. Ball valve according to one of the preceding claims, **characterized in that** active surfaces (46a, 46b) of the main channel sealing elements (28a, 28b) and/or active surfaces (48a, 48b) of the additional sealing elements (30a, 30b, 30a', 30b') are designed in such a way that a fluid present at these sealing elements (28a, 28b, 30a, 30b, 30a', 30b') exerts a pressure on the active surfaces (46a, 46b, 48a, 48b) pressing the sealing elements (28a, 28b, 30a, 30b, 30a', 30b') against the ball plug (22).

9. Ball valve according to one of the preceding claims, **characterized in that** a first pressure-influencing channel is connected to the lock chamber (12), by means of which the lock chamber (12) can be relieved of pressure or charged with pressure in the closed state of the ball plug (22), and **in that** a second pressure-influencing channel is connected to the monitoring chamber (32), by means of which the monitoring chamber (32) can be relieved of pressure or charged with pressure in the closed state of the ball plug (22).

10. Ball valve according to one of the preceding claims, **characterized in that** at least one of the following elements is provided:
- an actuator (26) projecting from the valve housing (10);
- a taper in the ball plug (22) formed in insertion direction of a pig and/or
- a sieve (58) in the passage opening (24).
and/or **in that** the ball valve is designed as a pigging valve and/or the ball valve is designed for at least one of the following parameter ranges:
- Nominal diameter of the fluid line: 1.27 cm to 142.24 cm (0.5" to 56");
- Pressure in the fluid line: 10 kPa to 150,000 kPa (0.1 to 1500 bar);
- Temperature of the fluid in the fluid line: -200°C to +650°C.

## Revendications

1. Robinet à boisseau sphérique avec
- un corps de robinet (10);
- une chambre d'écluse (12) pour l'introduction d'objets ou de fluides en cas de besoin ;
- un boisseau sphérique (22) logé de manière rotative dans la chambre d'écluse (12), qui présente une ouverture de passage (24) orientée transversalement à l'axe de rotation et qui est disposé de manière rotative par le biais d'un organe de réglage (26) de telle sorte que le boisseau sphérique (22) puisse être amené dans au moins une position ouverte et dans au moins une position fermée ;
- au moins une section d'entrée de canal principal (18a) et au moins une section de sortie de canal principal (18b) pour l'intégration du robinet à boisseau sphérique dans une conduite de fluide ;
- la section d'entrée de canal principal (18a) et la section de sortie de canal principal (18b) étant reliées de manière à pouvoir être traversées par le fluide au moyen de l'ouverture de passage (24) dans la position ouverte du boisseau sphérique (22) et dans la position fermée du boisseau sphérique (22) la section d'entrée de canal principal (18a) et la section de sortie de canal principal (18b) étant séparées relatives au fluide ou le débit à partir de la section d'entrée de canal principal (18a) dans la section de sortie de canal principal (18b) étant au moins limité par au moins une dérivation, tandis que l'ouverture de passage (24) est accessible par l'extérieur par la chambre d'écluse (12) ; et
- des éléments d'étanchéité de canal principal (28a, 28b), au moyen desquels, lorsque le boisseau sphérique (22) est en position fermée, la chambre d'écluse (12) est rendue étanche par rapport à la section d'entrée de canal principal (18a) et à la section de sortie de canal principal (18b),
**caractérisé en ce que**
des éléments d'étanchéité supplémentaires (30a, 30b, 30a', 30b') sont prévus de telle sorte qu'une chambre de surveillance (32) étanchéifié dans la position fermée du boisseau sphérique (22) est formé pour surveiller un fonctionnement correct des éléments d'étanchéité de canal principal (28a, 28b) à l'intérieur de la chambre d'écluse (12).

2. Robinet à boisseau sphérique selon la revendication précédente, **caractérisé en ce que** la section d'entrée de canal principal (18a), la section de sortie de canal principal (18b) et la chambre d'écluse (12) sont disposés dans le corps de robinet (10), la chambre d'écluse (12) étant orienté orthogonalement à la section d'entrée de canal principal (18a) et/ou à la section de sortie de canal principal (18b).

3. Robinet à boisseau sphérique selon l'une des revendications précédentes, **caractérisé en ce que** les éléments d'étanchéité supplémentaires (30a, 30b, 30a', 30b') sont disposés dans au moins l'une des deux zones suivantes :
- dans la chambre d'écluse (12),
- à la limite de la chambre d'écluse (12) avec la section d'entrée de canal principal (28a) et la section de sortie de canal principal (28b).

4. Robinet à boisseau sphérique selon l'une des revendications précédentes, **caractérisé en ce que** des moyens de surveillance sont prévus pour surveiller un état de la chambre de surveillance (32).

5. Robinet à boisseau sphérique selon l'une des revendications précédentes, **caractérisé en ce que** le corps de robinet (10) comporte un couvercle de corps (42) et/ou une fermeture d'écluse (16) pour fermer la chambre d'écluse (12).

6. Robinet à boisseau sphérique selon l'une des revendications précédentes, **caractérisé en ce que** les éléments d'étanchéité de canal principal (28a, 28b) et/ou les éléments d'étanchéité supplémentaires (30a, 30b, 30a', 30b') comprennent chacun au moins un anneau de siège métallique (38a, 38b) et/ou un moyen d'étanchéité élastique (40a, 40b).

7. Robinet à boisseau sphérique selon l'une des revendications précédentes, **caractérisé en ce que** les éléments d'étanchéité supplémentaires (30a, 30b, 30a', 30b') sont disposés de manière à pouvoir être déplacés et/ou bloqués.

8. Robinet à boisseau sphérique selon l'une des revendications précédentes, **caractérisé en ce que** des surfaces actives (46a, 46b) des éléments d'étanchéité de canal principal (28a, 28b) et/ou des surfaces actives (48a, 48b) des éléments d'étanchéité supplémentaires (30a, 30b, 30a', 30b') sont réalisées de telle sorte, qu'un fluide présent sur ces éléments d'étanchéité (28a, 28b, 30a, 30b, 30a', 30b') exerce une pression sur les surfaces actives (46a, 46b, 48a, 48b) pressant les éléments d'étanchéité (28a, 28b, 30a, 30b, 30a', 30b') contre le boisseau sphérique (22).

9. Robinet à boisseau sphérique selon l'une des revendications précédentes, **caractérisé en ce qu'**un premier canal d'influence de la pression est relié à a chambre d'écluse (12), au moyen duquel la chambre d'écluse (12) peut être déchargée de la pression ou soumise à une pression lorsque le boisseau sphérique (22) est fermé, et **en ce qu'**un deuxième canal d'influence de la pression est relié à la chambre de surveillance (32), au moyen duquel la chambre de surveillance (32) peut être déchargée de la pression ou soumise à une pression lorsque le boisseau sphérique (22) est fermé.

10. Robinet à boisseau sphérique selon l'une des revendications précédentes, **caractérisé en ce qu'**au moins l'un des éléments suivants est prévu :
- un organe de réglage (26) faisant saillie par rapport au corps du robinet (10) ;
- un rétrécissement formé dans la direction d'insertion d'un racleur dans le boisseau sphérique (22) et/ou
- un tamis (58) dans l'ouverture de passage (24).
et/ou **en ce que** le robinet à boisseau sphérique est conçu comme un robinet de racleur et/ou le robinet à boisseau sphérique est conçu pour au moins l'une des plages de paramètres suivantes :
- Diamètre nominal de la conduite de fluide : 1,27 cm à 142,24 cm (0,5" à 56") ;
- Pression dans la conduite de fluide : 10 kPa à 150 000 kPa (0,1 à 1500 bar) ;
- Température du fluide dans la conduite de fluide : -200°C à +650°C.
